# EUROPÄISCHE PATENTSCHRIFT

(11) **EP 2 647 860 B1**
(45) Veröffentlichungstag und Bekanntmachung des Hinweises auf die Patenterteilung: **06.12.2023**
(21) Anmeldenummer: 13001552.2
(22) Anmeldetag: 26.03.2013
(51) Int. Cl.: F16C 35/02, F16C 33/08, B23P 11/00, B21J 15/04, F16B 19/10

(54) **Buchse zum Koppeln mit einem Bauteil**
Bushing for coupling with a component
Douille à raccorder à un composant

(30) Priorität: 05.04.2012 DE 102012007010
(43) Veröffentlichungstag der Anmeldung: 09.10.2013
(73) Patentinhaber: Liebherr-Aerospace Lindenberg GmbH, 88161 Lindenberg/Allgäu (DE)
(72) Erfinder: Eckart, Martin, 88171 Simmerberg (DE)
(74) Vertreter: Laufhütte, Dieter

(56) Entgegenhaltungen:
- DE-A1- 19 950 719
- DE-C1- 19 609 252
- DE-U1-202005 005 827
- GB-A- 2 190 435
- JP-A- 2005 034 857
- JP-U- S62 199 522
- US-A- 1 226 090
- US-A1- 2005 058 375
- US-A1- 2009 190 868

## Beschreibung

Die Erfindung betrifft ein Verfahren zum Vermeiden einer Relativbewegung zwischen einer Buchse und einem mit der Buchse gekoppelten Bauteil.

Aus dem Stand der Technik ist eine Vielzahl von unterschiedlich ausgebildeten Buchsen bekannt. Die Buchsen können in ein Bauteil eingesetzt oder auf ein Bauteil gesetzt werden. Dabei soll die Befestigung der Buchsen an den Bauteilen derart erfolgen, dass keine Relativbewegung zwischen der Buchse und dem Bauteil erfolgt. Eine Relativbewegung zwischen der Buchse und dem Bauteil kann durch schwellende oder wechselnde Belastungen der Buchse und/oder des Bauteils hervorgerufen werden. Buchsen, die sich an der Fügestelle bewegen, führen zu erhöhten Verschleiß an der Fügestelle oder bei der Verwendung von korrosiven Werkstoffen sehr häufig zu erhöhter Korrosion an der Fügestelle. Es sind bereits verschiedene Verfahren bekannt, mittels denen die Fügekraft zwischen der Buchse und dem Bauteil erhöht wird, um die zuvor genannte Relativbewegung zu verhindern.

So ist es bekannt, dass Buchsen zum Verschleißschutz oder Korrosionsschutz von Bauteilen thermisch eingefügt werden. Dabei ist die Fügekraft aufgrund der technischen Einschränkungen bei der Temperaturdifferenz zwischen der Buchse und dem Bauteil vor dem Fügen begrenzt. Zudem besteht ein Nachteil des thermischen Fügeverfahrens darin, dass die erreichbare Fügekraft nicht ausreicht, um ein Drehen oder Wandern der Buchse bei längerer schwellender oder wechselnder Lasteinwirkung im Betrieb sicher zu verhindern.

Ferner ist bekannt, die Buchse mittels einer hydraulischen Vorrichtung in ein Bauteil einzupressen oder auf ein Bauteil aufzupressen. Nachteilig an diesem Verfahren ist jedoch, dass eine speziell für diesen Zweck ausgebildete Vorrichtung zum Verpressen der Buchse benötigt wird.

Des Weiteren ist bekannt, dass die Buchse mit dem Bauteil verklebt werden kann.

Mit diesem Befestigungsverfahren können jedoch nur geringe Fügekräfte erzielt werden, so dass der Einsatzbereich des Befestigungsverfahrens auf Einsatzfälle der Buchse beschränkt bleibt, bei denen auf diese keine hohen Lasten wirken.

In Dokument GB 2 190 435 A wird ein Sinterlager in einer Bohrung eines dünnwandigen Bauteils eines kleinen Elektromotors befestigt. Bei diesem gattungsgemäßen Befestigungsverfahren wird eine Wand einer stirnseitig angeordnetet Nut umgebördelt. H Ein weiteres gattungsgemäßes Verfahren geht aus dem Dokument JP 2005 034 857 A hervor, wobei eine Buchse eine relativ tiefe, stirnseitig angeordnete Nut aufweist. Eine Wand dieser Nut wird zur Befestigung der Buchse an einem inneren oder äußeren Bauteil umgebördelt.

Die Aufgabe der Erfindung besteht darin, ein Verfahren zum Vermeiden einer Relativbewegung zwischen der Buchse und dem Bauteil vorzusehen, das wenigstens die zuvor genannten Nachteile nicht aufweist.

Die Aufgabe wird durch das Verfahren nach Anspruch 1 gelöst. Eine vorteilhafte Ausgestaltung der Erfindung ist Gegenstand des Unteranspruchs 2.

Erfindungsgemäß ist ein Verfahren zum Vermeiden einer Relativbewegung zwischen einer Buchse, insbesondere eine Lagerbuchse, und einem mit der Buchse (2) gekoppelten Bauteil vorgesehen.

Zum Vermeiden einer Relativbewegung zwischen der Buchse und dem Bauteil wird das Formschlussmittel umgeformt, und in Formschluss mit dem Bauteil gebracht.

Aufgrund der Formschlussverbindung zwischen der Buchse und dem Bauteil wird die Gefahr einer Relativbewegung zwischen der Buchse und dem Bauteil aufgrund von schwellenden oder wechselnden Belastungen signifikant reduziert.

Insbesondere erhöht sich in Kombination mit dem oben genannten thermischen Installationsverfahren die Fügekraft zwischen der Buchse und dem Bauteil, so dass ein Buchsenwandern verhindert wird.

Erfindungsgemäß wird das Formschlussmittel auf der Buchse mittels eines Einstemmverfahrens oder eines Einrollverfahrens hergestellt.

Im Sinne der Erfindung wird unter einem Einstemmverfahren ein Verfahren verstanden, bei dem das Formschlussmittel durch ein Stemmwerkzeug hergestellt wird. Beim erfindungsgemäßen Einstemmverfahren kann eine zeitgleiche Verformung des Formschlussmittels der Buchse realisiert werden. Im Sinne der Erfindung wird als Einrollverfahren ein derartiges Verfahren verstanden, bei dem das Formschlussmittel durch ein Einrollwerkzeug hergestellt wird.

Die Buchse weist einen Buchsenkörper und einen Kopfabschnitt auf, der sich quer, insbesondere senkrecht, von dem Buchsenkörper erstreckt. Das Formschlussmittel ist an einem von dem Kopfabschnitt abgewandten Ende des Buchsenkörpers vorgesehen.

Der Kopfabschnitt kann einstückig mit dem Buchsenkörper ausgebildet sein. Das Vorsehen einer Buchse mit Kopfabschnitt bietet den Vorteil, dass bei der Kopplung der Buchse mit dem Bauteil der Kopfabschnitt selbst zum Vermeiden einer Relativbewegung zwischen der Buchse und dem Bauteil in wenigstens einer Richtung, insbesondere in einer Längsrichtung der Buchse, dient. Dabei kann der Kopfabschnitt und/oder der Buchsenkörper unmittelbar mit dem Bauteil gekoppelt sein.

Vor einem Bearbeiten der Buchse zum Herstellen des Formschlussteils wird die Buchse auf ein Bauteil aufgesetzt oder in ein Bauteil eingesetzt.

Dies bietet den Vorteil, dass nach dem Bearbeitungsvorgang und dem plastischen keine weiteren Arbeitsschritte mehr notwendig sind.

Beim Herstellen des Formschlussmittels wird eine Nut in die Buchse geformt.

Die Nut kann an einer Stirnfläche der Buchse erzeugt werden. Das Formen einer Nut in der Buchse bietet den Vorteil, dass das Formschlussmittels zum Erzeugen einer Formschlussverbindung leicht verformt werden kann. Dabei ist der Buchsenkörper der Teil der Buchse, der bei der Erzeugung des Formschlussmittels nicht bearbeitet wird.

Dabei kann das Formschlussmittel als ein von dem Buchsenkörper hervorstehender Abschnitt ausgebildet sein. Ferner kann in das Bauteil eine dem Formschlussmittel gegengeformte Aussparung erzeugt werden, in die das Formschlussmittel eindringen kann. Dies bietet den Vorteil, dass sich die Gefahr einer Relativbewegung zwischen der Buchse und dem Bauteil weiter verringert.

Erfindungsgemäß wird zum Herstellen und Verformen des Formschlussmittels das gleiche Werkzeug eingesetzt.

Dies bietet den Vorteil, dass der Herstellvorgang des Formschlussmittels auf der Buchse schnell und somit kostengünstig erfolgt. So wird bei der Herstellung der Buchse mit dem Einstemmverfahren oder dem Einrollverfahren das Stemmwerkzeug bzw. das Einrollwerkzeug dazu benutzt, das Formschlussmittel zu verformen. Dazu wird durch das Werkzeug eine Kraft auf das Formschlussmittel in Richtung zum Bauteil ausgeübt.

Die Buchse kann auf ein Bauteil aufgesetzt oder in ein Bauteil eingesetzt werden.

Im Folgenden wird daher die Buchse, die auf ein Bauteil, wie z.B. ein Pin, Dorn, Schaft oder dergleichen, aufgesetzt wird, als außenliegende Buchse und die Buchse, die in eine Bauteil eingesetzt wird, als innenliegende Buchse bezeichnet. Dementsprechend hängt die Verformrichtung des Formschlussteils davon, ob es sich bei der Buchse um eine außenliegende oder innenliegende Buchse handelt. In beiden Fällen wird das Formschlussmittel jeweils in Richtung zum Bauteil verformt, insbesondere gebogen.

Die Buchsen können aus verschiedenen Materialien gefertigt sein und können zu verschiedenen Zwecken Einsatz finden, wie z.B. zum Verschleißschutz, Korrosionsschutz oder Reperaturverfahren von Lasteinleitungspunkten bzw. Befestigungspunkten zwischen verschiedenen Bauteilen.

Mit der vorliegenden Erfindung wird die Längsbewegung durch Formschluß und die Relativbewegung durch Reibschluß verhindert. Schließlich kann ein vorhandenes Spiel kompensiert werden.

Weitere Einzelheiten und Vorteile der Erfindung sollen nun anhand der in den Zeichnungen dargestellten Ausführungsbeispiele näher erläutert werden.

Dabei zeigen:
- Fig. 1: eine mit einem Bauteil gekoppelte Buchse vor einem Verformvorgang des Formschlussmittels,
- Fig. 2: eine mit dem Bauteil gekoppelte Buchse nach einem Verformvorgang des Formschlussmittels,
- Fig. 5: eine Vorrichtung zur Durchführung eines erfindungsgemäßen Einrollverfahrens,
- Fig. 6: einen vergrößerten Abschnitt der in Fig. 5 gezeigten Vorrichtung.

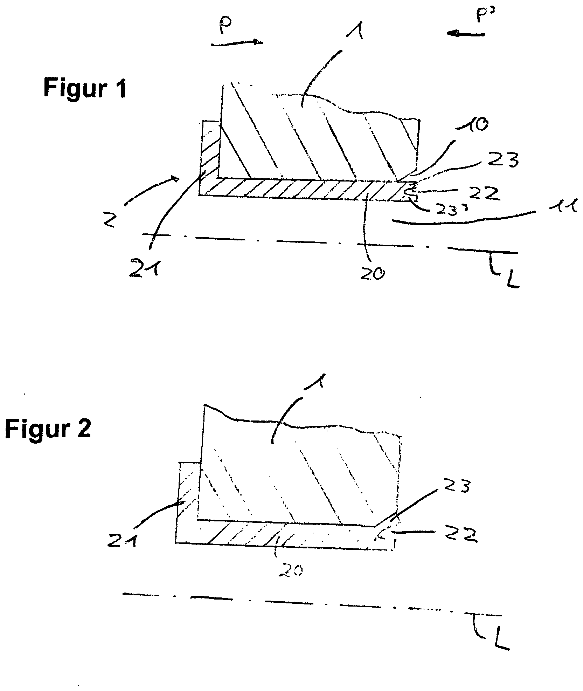

Die in Figur 1 gezeigte Buchse 2 ist mit einem Bauteil 1 gekoppelt. Insbesondere wird die Buchse 2 zum Teil in eine Ausnehmung 11 des Bauteils 1 eingesetzt. Die Buchse 2 weist einen Kopfabschnitt 21 und einen Buchsenkörper 20 auf. Der Kopfabschnitt 21 erstreckt sich im Wesentlichen senkrecht von dem Buchsenkörper 20 und ist in Kontakt mit dem Bauteil 1. Der Buchsenkörper 20 ist ebenfalls in Kontakt mit dem Bauteil 1. Durch das Vorsehen des Kopfabschnitts 21 bzw. durch den unmittelbaren Kontakt des Kopfabschnitts 21 mit dem Bauteil 1 wird eine Buchsenbewegung in Längsrichtung P' der Buchse 2 verhindert.

Die Buchse 2 weist an ihrem dem Kopfabschnitt 21 abgewandten Ende zwei Formschlussmittel in Form von zwei hervorstehenden Abschnitten 23, 23' auf. Die beiden Formschlussmittel werden durch eine Nut 22 voneinander getrennt und ragen von dem Buchsenkörper 20 vor. Die Nut 22 erstreckt sich von der Stirnseite der Buchse 2 in Richtung zum Kopfabschnitt 21. Der Buchsenkörper 20 wird als der Teil der Buchse 2 angesehen, der bei der Herstellung der Nut 22 nicht bearbeitet wird.

In dem Bauteil 1 ist eine Aussparung 10 vorgesehen, die zum Formschlussmittel bzw. zum hervorstehenden Abschnitt 23, 23' gegengeformt ist.

Dabei wird in Figur 1 ein Zustand gezeigt, bei dem keine Verformung des hervorstehenden Abschnitts 23, 23' erfolgt. Dies bedeutet, dass sich die Buchse 2 noch in eine Längsrichtung P' der Buchse 2 bewegen kann, wobei die Bewegung in Längsrichtung P' entgegengesetzt zu der Bewegung in Längsrichtung gerichtet ist. In Figur 2 wird ein Zustand gezeigt bei der eine Verformung des Formschlussmittels erfolgt ist. So wird das Formschlussmittel bzw. der dem Bauteil 1 näher gelegene hervorstehende Abschnitt 23 derart umgeformt, dass dieser in die Aussparung 10 eindringt und in Kontakt mit dem Bauteil 1 gelangt. Im Ergebnis wird durch das Umformen ein Formschluss zwischen der Buchse 2 und dem Bauteil 1 erreicht. Durch das Verformen des Formschlussmittels bzw. des hervorstehenden Abschnitts 23 und das damit verbundene Kontaktieren des hervorstehenden Abschnitts 23 mit dem Bauteil 1 kann eine Bewegung der Buchse in Längsrichtung P' und eine Rotationsbewegung verhindert werden. Gleichzeitig kann durch das Kontaktieren des Bauteils 1 mit dem Kopfabschnitt 21 und dem Formschlussmittel eine Bewegung der Buchse 2 in einer Richtung quer zu einer Längsachse L der Buchse 2 verhindert werden.

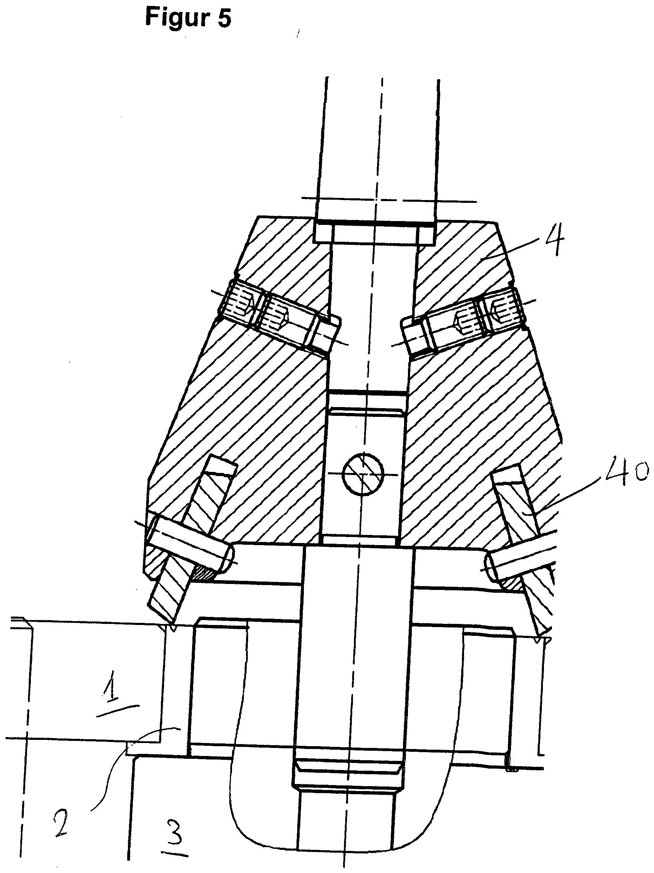

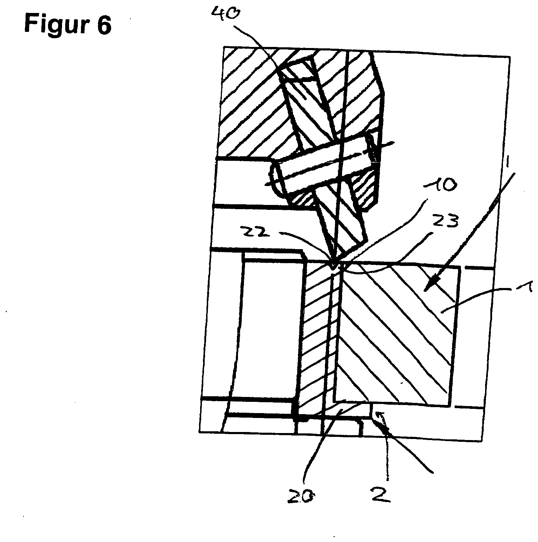

In Figur 5 wird eine Bearbeitungsvorrichtung zur Durchführung des Einrollverfahrens gezeigt. In Figur 6 wird ein vergrößerter Abschnitt des Eingriffsbereichs des Vorrichtungswerkzeugs mit der Buchse dargestellt. Die Bearbeitungsvorrichtung weist einen Träger 3 zum Tragen der Buchse 2 und des Bauteils 1 auf. Ferner weist die Bearbeitungsvorrichtung einen Werkzeughalter 4 auf, der ein Werkzeug 40 hält. Das Werkzeug 40 kann sich um eine Drehachse drehen als auch eine Hubbewegung entlang einer Längsachse der Bearbeitungsvorrichtung durchführen. Der Werkzeughalter kann eine Ständerbohrmaschine sein.

Im Folgenden wird der Fügevorgang der Buchse 2 mit dem Bauteil 1 erläutert. In das Bauteil 1 wird vor dem Koppelvorgang mit der Buchse 2 die Aussparung 10 erzeugt. Dies kann durch die in Figur 5 dargestellte Bearbeitungsvorrichtung oder eine andere Vorrichtung erfolgen. Anschließend erfolgt eine Kopplung der Buchse 2 mit dem Bauteil 1. Dazu wird die Buchse 2 in die Aussparung 11 des Bauteils eingesetzt. Nach dem Einsetzvorgang wird mittels des Werkzeugs 40 die Nut 22 und damit das Formschlussmittel in der Buchse 2 erzeugt.

Letztendlich wird durch das gleiche Werkzeug 40 eine Kraft in Richtung zum Kopfabschnitt 20 der Buchse ausgeübt, so dass das Formschlussmittel bzw. der hervorstehende Abschnitt 23 verformt wird. Dabei wird das Formschlussmittel gebogen und dringt in die Aussparung 10 des Bauteils 1 ein und gelangt mit diesem in Kontakt, wodurch ein Formschluss zwischen der Buchse 2 und dem Bauteil 1 erzeugt wird. Im Anschluss an den Verformvorgang ist die Buchse 2 derart mit dem Bauteil 1 gekoppelt, dass eine Relativbewegung zwischen der Buchse 2 und dem Bauteil 1 nicht möglich ist.

## Patentansprüche

1. Verfahren zum Vermeiden einer Relativbewegung zwischen einer Buchse (2) und einem mit der Buchse (2) gekoppelten Bauteil (1), das folgende Schritte aufweist:
- Bearbeiten der Buchse (2) zum Herstellen eines Formschlussmittels, wobei die Buchse (2) einen Buchsenkörper (20) und einen Kopfabschnitt (21) aufweist, der sich quer, insbesondere senkrecht, von dem Buchsenkörper (20) erstreckt, und wobei das Formschlussmittel (23, 23') an einem von dem Kopfabschnitt (21) abgewandten Ende des Buchsenkörpers (20) vorgesehen ist, und
- Umformen des Formschlussmittels (23, 23'), so dass nach dem Umformvorgang eine Formschlussverbindung zwischen der Buchse (2) und dem Bauteil (1) besteht,
wobei zum Herstellen des Formschlussmittels (23, 23') eine Nut (22) in die Buchse (2) geformt wird und wobei der Buchsenkörper (20) der Teil der Buchse (2) ist, der bei der Herstellung der Nut (22) nicht bearbeitet wird,
**dadurch gekennzeichnet,**
**dass** das Herstellen des Formschlussmittels (23, 23') mittels eines Einrollverfahrens oder eines Einstemmverfahrens durchgeführt wird und
**dass** das Umformen des Formschlussmittels mittels der gleichen Bearbeitungsvorrichtung und dem gleichen Werkzeug (40) erfolgt, mittels dem das Formschlussmittel (23, 23') erzeugt wird.

2. Verfahren nach Anspruch 1, **dadurch gekennzeichnet, dass** in dem Bauteil (1) eine zu dem Formschlussmittel (23, 23') gegengeformte Aussparung (10) erzeugt wird

## Claims

1. Method for preventing relative displacement between a bushing (2) and a component (1) coupled to the bushing (2), comprising the following steps:
- machining the bushing (2) to produce a form-fitting means, wherein the bushing (2) comprises a bushing body (20) and a head portion (21) which extends transversely, in particular perpendicularly, to the bushing body (20), and wherein the form-fitting means (23, 23') is provided at an end of the bushing body (20) remote from the head portion (21), and
- shaping of the form-fit means (23, 23') so that a form-fit connection exists between the bushing (2) and the component (1) after the shaping operation,
wherein a groove (22) is formed in the bushing (2) for producing the form-fitting means (23, 23') and wherein the bushing body (20) is the part of the bushing (2) which is not machined when forming the groove (22),
**characterized in that**
the form-fit means (23, 23') is manufactured by means of a curling process or a mortising process, and
that the shaping of the form-fit means is carried out by means of the same machining device and the same tool (40), by means of which the form-fit means (23, 23') is produced.

2. Method as claimed in claim 1, **characterized in that** a recess (10) is produced in the component (1) which is counter-formed to the form-fit means (23, 23').

## Revendications

1. Procédé pour éviter un déplacement relatif entre une douille (2) et un composant (1) couplé à la douille (2), qui présente des étapes suivantes:
- d'usinage de la douille (2) pour fabriquer un moyen à complémentarité de forme, dans lequel la douille (2) présente un corps de douille (20) et une section de tête (21), qui s'étend de manière transversale, en particulier de manière perpendiculaire, par rapport au corps de douille (20), et dans lequel le moyen à complémentarité de forme (23, 23') est prévu sur une extrémité, opposée à la section de tête (21), du corps de douille (20), et
- de mise en forme du moyen à complémentarité de forme (23, 23') de telle sorte qu'il existe une liaison à complémentarité de forme entre la douille (2) et le composant (1) après l'opération de mise en forme,
dans lequel une rainure (22) est formée dans la douille (2) pour fabriquer le moyen à complémentarité de forme (23, 23') et dans lequel le corps de douille (20) est la partie de la douille (2) qui n'est pas usinée lors de la fabrication de la rainure (22),
**caractérisé en ce que**
la fabrication du moyen à complémentarité de forme (23, 23') est mise en oeuvre au moyen d'un procédé d'enroulement ou d'un procédé de matage, et que la mise en forme du moyen à complémentarité de forme est effectuée au moyen du même dispositif d'usinage et du même outil (40), au moyen duquel le moyen à complémentarité de forme (23, 23') est produit.

2. Procédé selon la revendication 1, **caractérisé en ce qu'**un évidement (10) contre-formé par rapport au moyen à complémentarité de forme (23, 23') est généré dans le composant (1).
